(19) Europäisches Patentamt
European Patent Office
Office européen des brevets

(11) EP 1 894 962 B1

(12) # EUROPÄISCHE PATENTSCHRIFT

(45) Veröffentlichungstag und Bekanntmachung des Hinweises auf die Patenterteilung:
**17.12.2008 Patentblatt 2008/51**

(51) Int Cl.:
***C08G 77/46*** *(2006.01)* ***C08K 5/54*** *(2006.01)*
***C08L 83/12*** *(2006.01)*

(21) Anmeldenummer: **07113695.6**

(22) Anmeldetag: **02.08.2007**

(54) **Verwendung von gepfropften Polyethersiloxanmischpolymeren zur Verbesserung der Kältestabilität von Entschäumern in wässrigen Dispersionen**

Use of grafted polyether siloxane mixed polymers to improve the stability at low temperatures of defoamers in aqueous solutions

Utilisation de polymères de mélange de siloxane de polyéther tamponnés pour l'amélioration de la stabilité à froid d'agents antimoussant dans des dispersions aqueuses

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **01.09.2006 DE 102006041089**

(43) Veröffentlichungstag der Anmeldung:
**05.03.2008 Patentblatt 2008/10**

(73) Patentinhaber: **Evonik Goldschmidt GmbH**
**45127 Essen (DE)**

(72) Erfinder:
- **Venzmer, Joachim, Dr.**
  **45239 Essen (DE)**
- **Herrwerth, Sascha, Dr.**
  **45134 Essen (DE)**
- **Maslek, Sandra**
  **45257 Essen (DE)**
- **Mund, Christian, Dr.**
  **45149 Essen (DE)**
- **Schwab, Peter, Dr.**
  **45133 Essen (DE)**

(56) Entgegenhaltungen:
**EP-A- 1 801 136** **DE-A1- 1 645 569**
**DE-A1- 3 123 103**

EP 1 894 962 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Verwendung von Polyoxyalkylen-Polysiloxan-Blockmischpolymerisaten, auch unter der Bezeichnung Polyethersiloxane bekannt, als Entschäumungsmittel für die Entschäumung wässriger Lösungen oder Dispersionen ist bekannt und zum Beispiel in der DE-A-1 012 602 beschrieben.

Insbesondere durch die Verwendung von wasserunlöslichen Blockmischpolymerisaten diesen Typs lassen sich die entschäumenden Eigenschaften in diesen Anwendungen noch deutlich verbessern. Eine solche Zubereitung zur Entschäumung wässriger Lösungen oder Dispersionen ist in DE-A-2 443 853 beschrieben. Ebenso sind Mischungen aus organischen Ölen, wie z. B. Ester von Alkoholen und Fettsäuren und einem Polydimethylsiloxan-Polyoxyalkylen-Blockpolymerisats als Entschäumerformulierungen beschrieben, wie z.B. in US-4 028 218 und DE-A-31 23 103 beansprucht.

Diese aus dem Stand der Technik bekannten Polyoxyalkylen-Polysiloxan-Blockmischpolymerisate enthaltenden Zubereitungen sind mehr oder weniger gut geeignet, die Schaumbildung von wässrigen Lösungen oder wässrigen Dispersionen zu vermeiden, haben aber den Nachteil, dass sie bei Verwendung in Dispersionen von Bindemitteln, Beschichtungsmitteln und Klebemitteln beim Aufbringen auf Oberflächen Benetzungsfehler hervorrufen. In besonderem Maße treten solche Benetzungsfehler, die durch eine ungleichmäßige Benetzung des Untergrundes oder durch die Ausbildung von Fehlstellen unterschiedlicher Größe zum Ausdruck kommen, bei wässrigen Dispersionen von Polyurethanen auf.

In der DE-A-38 07 247 werden Polyoxyalkylen-Polysiloxan-Blockmischpolymere beansprucht, die in wässrigen Dispersionen polymerer organischer Substanzen gute entschäumende Wirkung zeigen, aber gleichzeitig keine Benetzungsstörungen beim Auftragen dieser Dispersionen auf eine Oberfläche verursachen. Dies gilt insbesondere auch für das Auftragen von Entschäumer enthaltenden Dispersionen von Binde-, Beschichtungs- und Klebemitteln.

Es hat sich jedoch gezeigt, dass die mit derartigen Zubereitungen versetzten wässrigen Dispersionen polymerer organischer Substanzen anwendungstechnische Nachteile aufweisen. Insbesondere verlieren die eingesetzten Entschäumer nach Abkühlung der Dispersion auf bestimmte, in der Praxis beispielsweise während der Lagerung auftretender Temperaturen von z.B. 5 °C, teilweise oder vollständig ihre entschäumende Wirkung.

Der vorliegenden Erfindung liegt daher die Aufgabe zugrunde, neue Entschäumer bereitzustellen, die in wässrigen Dispersionen polymerer organischer Substanzen gute entschäumende Wirkung zeigen, keine Benetzungsstörungen beim Auftrag dieser Dispersionen auf eine Oberfläche verursachen und gleichzeitig ihre entschäumende Wirkung auch nach längerer Lagerung bei in der Praxis auftretenden Temperaturen bis zum Gefrierpunkt beibehalten.

Die der Erfindung zugrunde liegende Aufgabe kann überraschenderweise dadurch gelöst werden, dass man gepfropfte Polyoxyalkylen-Polysiloxan-Blockmischpolymerisate P einsetzt, die durch Pfropfen mit ethylenisch ungesättigten Verbindungen (Monomeren) M auf Polyoxyalkylen-Polysiloxan-Blockmischpolymere oder auf entsprechenden Vorstufen erhalten worden sind. Gegenstand der vorliegenden Erfindung ist deshalb eine Verwendung von Pfropfmischpolymerisaten P wie in den Ansprüchen beansprucht.

Für die Herstellung der erfindungsgemäß einzusetzenden gepfropften Mischpolymere P kommen prinzipiell zwei Verfahren in Frage. Beim ersten Verfahren werden die Polyoxyalkylen-Polysiloxan-Blockmischpolymere vor dem Pfropfschritt hergestellt, beim zweiten Verfahren werden zuerst die Polyether gepfropft und danach die gepropften Polyether mit den entsprechenden Siloxanen zu erfindungsgemäß einzusetzenden, gepfropften Polyethersiloxanen P umgesetzt. Die erfindungsgemäß einzusetzenden Produkte können nach beiden Verfahren so hergestellt werden, dass sie nicht zu unterscheiden sind.

Die Polyoxyalkylen-Polysiloxan-Blockmischpolymere, die als Pfropfgrundlage dienen können, werden durch die folgende Formel (I)

$$R^1{-}O{-}[A]_p[B{-}A]_m B{-}[A]_q{-}R^1 \qquad (I)$$

wobei der Rest

A ein Polyoxyalkylenblock der durchschnittlichen Formel (II) ist,

$$[(C_2H_{4-d}R'_dO)_n(C_xH_{2x}O)_r(C_2H_{4-d}R''_dO)_t] \qquad (II)$$

wobei
d 1 bis 3,
n ≥ 0,
x 2 bis 10,
r ≥ 0,
t ≥ 0, n + r + t ≥ 1,
sind und
R' ein einwertiger aromatischer, gegebenenfalls substituierter Kohlenwasserstoffrest,
R" ein Wasserstoffrest oder ein einwertiger Kohlenwasserstoffrest mit 1 bis 18 C-Atomen,
$R^1$ ein H-Atom, ein einwertiger organischer linearer oder verzweigter Alkylrest mit der Kettenlänge $C_1$-$C_{40}$ oder ein Carboxyrest eines gegebenenfalls verzweigten Alkyl- oder Arylesters, ist,

B ein Polysiloxanblock der durchschnittlichen Formel (III) ist,

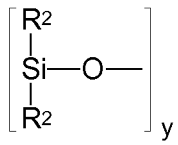

(III)

wobei
$R^2$ gleich oder verschieden ist und einen Alkylrest mit 1 bis 4 Kohlenstoffatomen oder einen Phenylrest umfasst und
y einen Wert von 5 bis 200,
m einen Wert von 2 bis 100,
p einen Wert von 0 bis 1 und
q einen Wert von 0 bis 1 hat, oder durch die Formel (IV) beschrieben,

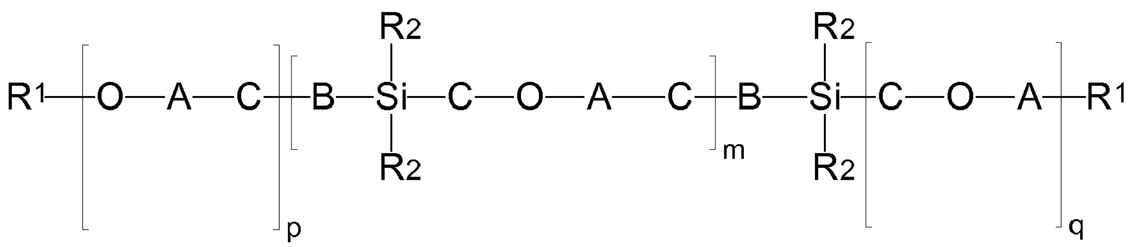

(IV)

wobei die Reste $R^1$, A, B und m, p und q die oben genannte Bedeutung haben und

C ein linearer oder verzweigter Alkylenrest mit 2 bis 20 Kohlenstoffatomen ist.

Der Polyoxyalkylenblock A der allgemeinen Formel (II) kann dabei auch Mischungen verschiedener Polyoxyalkylenblöcke umfassen.

Besonders bevorzugt sind solche Polyoxyalkylen-Polysiloxan-Blockmischpolymere, bei denen alle Reste $R^2$ Methylreste sind. Vorzugsweise ist der Rest $R^1$ ein Wasserstoffrest, oder ein Alkylrest mit Kettenlängen zwischen $C_1$ und $C_6$.

Eine besonders hervorgehobene Bedeutung nimmt der Index m ein, welcher bei den erfindungsgemäß eingesetzten Blockmischpolymerisaten einen durchschnittlichen Wert von 3 bis 20 hat, vorzugsweise 4 bis 15, besonders bevorzugt 5 bis 13.

Die zur Herstellung der gepfropften Mischpolymere P nach dem zweiten Verfahren verwendeten Polyether PE schließen alle die difunktionellen Polyether PE ein, die anschließend an den Pfropfvorgang mit $\alpha,\omega$-funktionellen Siloxanen linear so verknüpft werden können, dass $(AB)_n$-Strukturen entstehen.

Eine Vielzahl geeigneter Polyetherderivate PE ist als Pfropfgrundlage verfügbar.

Besonders geeignete Polyetherderivate PE sind solche der allgemeinen Formel (V),

$$F(O(C_2H_{4-d}R'_dO)_n(C_xH_{2x}O)_r(C_2H_{4-d}R''_dO)_tF) \qquad (V)$$

mit der Bedeutung

d 1 bis 3,
n ≥ 0,
x 2 bis 10,
r ≥ 0,
t ≥ 0,

n + r + t ≥ 1,

F ein H-Atom oder ein funktioneller gegebenenfalls verzweigter Kohlenwasserstoffrest mit 1 bis 18 C-Atomen,
R' ein einwertiger aromatischer, gegebenenfalls substituierter Kohlenwasserstoffrest,
R" ein Wasserstoffrest oder ein einwertiger Kohlenwasserstoffrest mit 1 bis 18 C-Atomen.

Besonders bevorzugt sind dihydroxyfunktionelle Polyether der allgemeinen Formel (VI),

$$[HO(C_2H_{4-d}R'_dO)_n(C_xH_{2x}O)_r(C_2H_{4-d}R''_dO)_tH] \qquad (VI)$$

wobei R', R", d, n, x, t und r die oben genannten Bedeutungen haben.

Die gepfropften, difunktionellen Polyether werden dann, gegebenenfalls nach weiterer chemischer Modifizierung, mit $\alpha,\omega$-difunktionellen Siloxanen nach den dem Fachmann bekannten Methoden zu den erfindungsgemäßen gepfropften Polyethersiloxanmischpolymeren P umgesetzt. Besonders bevorzugt ist die Umsetzung von gepfropften dihydroxyfunktionellen Polyethern mit $\alpha,\omega$-SiH-Siloxanen oder $\alpha,\omega$-SiCl-Siloxanen.

Die dazu benötigten dihydroxyfunktionellen Polyether werden aus einem dihydroxyfunktionellen Startalkohol oder Wasser, durch Anlagerung von Monomeren gewonnen. Geeignete Monomere sind Ethylenoxid, Propylenoxid, Verbindungen aus der Gruppe Tetrahydrofuran, 1,2-Epoxybutan (n-Butylenoxid), 2,3-Epoxybutan (iso-Butylenoxid), Dodecyloxid, sowie Styroloxid und/oder Methylstyroloxid. Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen.

Die Monomere M können unter Verwendung konventioneller synthetischer Methoden in Gegenwart der Blockmischpolymerisate homo- oder copolymerisiert werden. Beispielsweise können dies Lösungspolymerisation, Emulsionspolymerisation, umgekehrte Emulsionspolymerisation, Suspensionspolymerisation, umgekehrte Suspensionspolymerisation oder Fällungspolymerisation sein, ohne dass die verwendbaren Methoden darauf beschränkt sind. Bei der Lösungspolymerisation können Wasser und übliche organische Lösungsmittel sowie die Polyoxyalkylen-Polysiloxan-Blockmischpolymere selbst als Lösungsmittel verwendet werden. Das letztgenannte Verfahren wird jedoch bevorzugt.

Die erfindungsgemäß eingesetzten gepfropften Mischpolymere P können jegliche relative Mengen Olefin aufgepfropft auf dem Polyethersiloxan enthalten. Bevorzugte Mengenverhältnisse liegen im Allgemeinen zwischen 5 und 100 Gew.-% des Monomer M in Bezug auf das jeweils zugrunde liegende Polyethersiloxan. Besonders bevorzugte Mengenverhältnisse liegen im Bereich zwischen 7 und 40 Gew.-% in Bezug auf das jeweils zugrunde liegende Polyethersiloxan.

Als Monomere M können Stoffe eingesetzt werden, die mit einer durch freie Radikale initiierten Reaktion polymerisiert werden können.

Geeignete Monomere M sind Kohlenwasserstoffe mit mindestens einer Kohlenstoff-Kohlenstoff-Doppelbindung beispielsweise Derivate der Acrylsäure und Methacrylsäure, wie durch die allgemeine Formel (VII) beschrieben

$$X\text{-}C(O)CR^7{=}CHR^6 \qquad (VII)$$

wobei

X ausgewählt ist aus der Gruppe der Reste OH, OL, $OR^8$, $NH_2$, $NHR^8$ und N $(R^8)_2$,
L ein Kation ausgewählt aus der Gruppe bestehend aus $Na^+$, $K^+$, $Mg^{2+}$, $Ca^{2+}$ , $Zn^{2+}$ $NH_4^+$, Alkylammonium, Dialkylammonium, Trialkylammonium, Tetraalkylammonium und analoge Phosphoniumderivate, ist
$R^7$ und $R^6$ unabhängig voneinander sind, ausgewählt aus der Gruppe bestehend aus: -H, $C_1$-$C_8$-linear- oder verzweigtkettige Alkylketten, Methoxy, Ethoxy, 2-Hydroxyethoxy, 2-Methoxyethoxy und 2-Ethoxyethyl,

$R^8$ abgeleitet sein kann von $C_1$-$C_{40}$-linearen, $C_3$-$C_{40}$-verzweigtkettigen, aromatischen oder $C_3$-$C_{40}$-carbocyclischen Alkylresten, von mehrfachfunktionellen Alkoholen mit 2 bis 10 Hydroxylgruppen wie Ethylenglycol, Hexylenglycol, Glycerin und 1,2,6-Hexantriol, von Alkoholethern wie Methoxyethanol und Ethoxyethanol oder Polyethylenglykolen.

Weitere geeignete Monomere M sind Vinylether, Vinylalkohole, Styrol, Derivate des Styrols, sowie Mischungen dieser Monomere.

Andere geeignete Monomere M sind Vinyl- und Allylester von $C_1$-$C_{40}$-linearen, $C_3$-$C_{40}$-verzweigtkettigen oder $C_3$-$C_{40}$-carbocyclische Carbonsäuren (z.B.: Vinylacetat, Vinylpropionat, Vinylneononanoat, Vinylneoundekansäure oder t-Butyl-benzoesäure-vinylester), Vinylhalogenide, bevorzugt Vinylchlorid und Vinylether, bevorzugt Methyl-, Ethyl-, Butyl-, oder Dodecylvinylether.

Weiterhin sind N-Vinylimidazole der allgemeinen Formel (VIII) geeignet, worin $R^{14}$ bis $R^{16}$ unabhängig voneinander für Wasserstoff, $C_1$-$C_8$-Alkyl oder Phenyl steht:

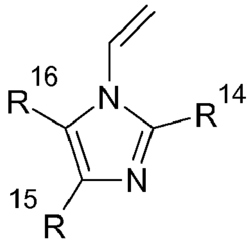

(VIII)

Ferner eignen sich N,N-Dialkylaminoalkylacrylate und -methacrylate und N-Dialkylaminoalkylacryl- und -Methacrylamide der allgemeinen Formel (IX)

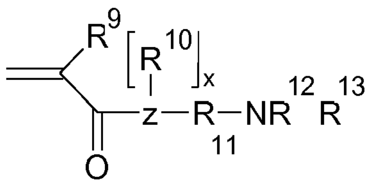

(IX)

mit

$R^9$ H, Alkyl mit 1 bis 8 C-Atomen,
$R^{10}$ H, Methyl,
$R^{11}$ Alkylen mit 1 bis 24 C-Atomen, optional substituiert durch Alkyl,
$R^{12}$, $R^{13}$ $C_1$-$C_{40}$-Alkylrest,
Z Stickstoff für x = 1 oder Sauerstoff für x = 0.

Die Amide können unsubstituiert, N-alkyl oder N-alkylamino monosubstituiert, oder N,N-dialkylsubstituiert oder N,N-dialkylamino disubstituiert sein, worin die Alkyl- oder Alkylaminogruppen von $C_1$-$C_{40}$-linearen, $C_3$-$C_{40}$-verzweigtkettigen, oder $C_3$-$C_{40}$-carbocyclischen Einheiten abgeleitet sind.

Bevorzugte Monomere der Formel (IX) sind N,N-Dimethylaminomethyl(meth)acrylat, N,N-Diethylaminomethyl (meth)-acrylat, N,N-Dimethylaminoethyl(meth)acrylat, N,N-Diethylaminoethyl(meth)acrylat und N,N-Dimethylaminopropyl(meth)acrylat.

Besonders geeignete Monomere M sind Methylacrylat, Ethylacrylat, Propylacrylat, n-Butylacrylat, iso-Butylacrylat, t-Butylacrylat, 2-Ethylhexylacrylat, Decylacrylat, Benzylacrylat, Benzylmethacrylat, Methylmethacrylat, Ethylmethacrylat, Propylmethacrylat, n-Butylmethacrylat, iso-Butylmethacrylat, t-Butylmethacrylat, 2-Ethylhexylmethacrylat, Decylmethacrylat, Methylethacrylat, Ethylethacrylat, n-Butylethacrylat, iso-Butylethacrylat, t-Butylethacrylat, 2-Ethylhexylethacrylat, Decylethacrylat, 2,3-Dihydroxypropylacrylat, 2,3-Dihydroxypropylmethacrylat, 2-Hydroxyethylacrylat, Hydroxypropylacrylate, 2-Hydroxyethylmethacrylat, 2-Hydroxyethylethacrylat, 2-Methoxyethylacrylat, 2-Methoxyethylmethacrylat, 2-Methoxyethylethacrylat, 2-Ethoxyethylmethacrylat, 2-Ethoxyethylethacrylat, Hydroxypropylmethacrylate,

Glycerylmonoacrylat, Glycerylmonomethacrylat, Polyalkylenglykol(meth)-acrylate, ungesättigte Sulfonsäuren, Vinylether (zum Beispiel: Methyl-, Ethyl-, Butyl-, oder Dodecylvinylether), Methylvinylketon, Vinylfuran, Styrol, alpha-Methylstyrol, metha-Methylstyrol, Methylstyrol-Isomerengemisch, tert.-Butylstyrol, Vinyltoluol, Styrolsulfonat und Mischungen daraus.

Zusätzlich zu den oben genannten Monomeren können als Monomere M sogenannte Makromonomere wie zum Beispiel etherhaltige Makromonomere mit ein oder mehreren radikalisch polymerisierbaren Gruppen oder Alkyloxazolinmakromonomere eingesetzt werden wie sie zum Beispiel in der EP-A-408 311 beschrieben sind.

Des Weiteren können fluorhaltige Monomere wie sie beispielsweise in der EP-B-558 423 beschrieben sind, vernetzend wirkende oder das Molekulargewicht regelnde Verbindungen in Kombination oder alleine eingesetzt werden.

Als Regler können die üblichen dem Fachmann bekannten Verbindungen wie zum Beispiel Schwefelverbindungen (z.B.: Mercaptoethanol, 2-Ethylhexylthioglykolat, Thioglykolsäure oder Dodecylmercaptan) sowie Tribromchlormethan oder andere Verbindungen die regelnd auf das Molekulargewicht der erhaltenen Polymerisate wirken, verwendet werden. Es können gegebenenfalls auch thiolgruppenhaltige Etherverbindungen eingesetzt werden. Bevorzugt werden aber etherfreie Regler eingesetzt und die Synthesebedinungen so eingestellt, dass keine Regler verwendet werden müssen.

Als vernetzende Monomere können Verbindungen mit mindestens zwei ethylenisch ungesättigten Doppelbindungen eingesetzt werden wie zum Beispiel Ester von ethylenisch ungesättigten Carbonsäuren, wie Acrylsäure oder Methacrylsäure und mehrwertigen Alkoholen, Ether von mindestens zweiwertigen Alkoholen wie zum Beispiel Vinylether oder Allylether. Außerdem geeignet sind geradkettige oder verzweigte, lineare oder cyclische aliphatische oder aromatische Kohlenwasserstoffe, die aber mindestens zwei Doppelbindungen vertragen, welche bei den aliphatischen Kohlenwasserstoffen nicht konjugiert sein dürfen. Weitere geeignete Vernetzer sind Divinyldioxan, Tetraallylsilan oder Tetravinylsilan.

Besonders bevorzugte Vernetzer sind beispielsweise Umsetzungsprodukte mehrwertiger Alkohole mit Acrylsäure oder Methacrylsäure, Methacrylsäureester und Acrylsäureester von Polyalkylenoxiden oder mehrwertigen Alkoholen die mit Ethylenoxid und/oder Propylenoxid und/oder Epichlorhydrin umgesetzt worden sind. Wie dem Fachmann geläufig ist, können aber die Molekulargewichte so eingestellt werden, dass keine Vernetzer notwendig sind.

Die Pfropfpolymerisation wird eingeleitet durch radikalische Initiatoren wie organische Peroxide, z.B. Dibenzoylperoxid, Diacetylperoxid, Dilauroylperoxid, durch Azo-Körper, wie z. B. Azobisisobutyronitril, oder durch irgendeinen anderen Stoff, der thermisch bedingt Radikale freisetzt. Auch Redoxsysteme, wie z. B. Dibenzoylperoxid/Benzoin können Anwendung finden.

Ferner kommt auch eine Aktivierung durch Bestrahlung in Betracht.

Die genannten Initiatoren werden in Mengen von etwa 0,01 bis 10 Gew.-%, vorzugsweise von 0,1 bis 3 % bezogen auf die Gesamtmenge aus Polyether und Monomere eingesetzt.

Die für die Reaktion gewählte Temperatur hängt von der zum Einsatz kommenden radikalbildenden Verbindung ab. Wird die Radikalbildung thermisch induziert, spielt die Halbwertszeit des Zerfalls zu den Primärbruchstücken eine entscheidende Rolle und kann so gewählt werden, dass sich in der Reaktionsmischung immer ein gewünschtes Verhältnis von freien Radikalen einstellt. Geeignete Temperaturbereiche liegen zwischen 30 °C und 225 °C, nach oben begrenzt durch die thermische Zersetzung der Pfropfgrundlage.

Die zur Herstellung der in Formel (IV) beschriebenen Polyoxyalkylen-Polysiloxan-Blockmischpolymere beispielsweise benötigten Diallylpolyether werden durch Umsetzung eines Startalkohols, der bevorzugt Allylalkohol ist, durch Anlagerung von Monomeren gewonnen. Als Monomere geeignet sind Ethylenoxid, Propylenoxid, Verbindung aus der Gruppe Tetrahydrofuran, 1,2-Epoxybutan (n-Butylenoxid), 2,3-Epoxybutan (iso-Butylenoxid), Dodecyloxid, sowie Stryoloxid und/oder Methylstyroloxid. Dabei kann die Verteilung der Monomere beliebig gewählt sein, so dass beispielsweise Blöcke enthalten sein können. Außerdem ist auch eine Mischung der Monomeren einsetzbar, so dass Polyether erhalten werden, in denen die Einheiten in statistischer Verteilung vorliegen. Anschließend kann die endständige OH-Gruppe mit Allylchlorid oder Methallylchlorid zum gewünschten Diallylpolyether bzw. Allylmethallylpolyether umgesetzt werden.

Die in der Formel (IV) beschriebenen Polyoxyalkylen-Polysiloxan-Blockmischpolymere werden durch Umsetzung der so erhaltenen Diallylpolyether bzw. Allylmethallylpolyether mit Polysiloxanen durch Addition an endständige SiH-Gruppen des Polysiloxans in Anwesenheit eines Hydrosilylierungskatalysators hergestellt. Nach dem Stand der Technik können Platin, Palladium oder Rhodium-Katalysatoren verwendet werden. Dabei wird nach dem Stand der Technik ein geringer Anteil an monofunktionellem Polyether oder monofunktionellem, terminalen Alken, oder eine Mischung aus monofunktionellen Polyethern und Alkenen beigemischt, um die Kettenlänge zu steuern.

Die zur Herstellung der in Formel (I) beschriebenen Polyoxyalkylen-Polysiloxan-Blockmischpolymere benötigten dihydroxyfunktionellen Polyether werden aus einem dihydroxyfunktionellen Startalkohol oder Wasser, durch Anlagerung von Monomeren gewonnen. Geeignet sind Ethylenoxid, Propylenoxid, Verbindung aus der Gruppe Tetrahydrofuran, 1,2-Epoxybutan (n-Butylenoxid), 2,3-Epoxybutan (iso-Butylenoxid), Dodecyloxid, sowie Stryoloxid und/oder Methylstyroloxid. Dabei kann die Verteilung der Monomere beliebig gewählt sein, so dass beispielsweise Blöcke enthalten

sein können. Außerdem ist auch eine Mischung der Monomeren einsetzbar, so dass Polyether erhalten werden, in denen die Einheiten in statistischer Verteilung vorliegen.

Die in der Formel (I) beschriebenen Polyoxyalkylen-Polysiloxan-Blockmischpolymere werden durch Umsetzung der so erhaltenen dihydroxyfunktionellen Polyether mit Polysiloxanen durch Kondensation mit endständigen SiH-Gruppen des Polysiloxans in Anwesenheit eines Kupplungskatalysators, nach dem Stand der Technik z.B. eines Borankatalysators, oder durch die Umsetzung von Polysiloxanen, welche endständige SiCl-Gruppen enthalten, hergestellt. Dabei wird nach dem Stand der Technik ein geringer Anteil an monofunktionellem Polyether oder monofunktionenellem Alkohol oder eine Mischung aus monofunktionellem Polyether und Alkohol beigemischt, um die Kettenlänge zu steuern.

Entsprechend dem Stand der Technik ist es möglich, den erfindungsgemäß einzusetzenden gepfropften Polyoxyalkylen-Polysiloxan-Blockmischpolymeren, bezogen auf diese, bis zu 20 Gew.-% anorganische oder organische feinteilige Feststoffe zuzusetzen. Beispiele anorganischer Feststoffe sind gegebenenfalls hydrophobierte Kieselsäure, Aluminiumoxid, Erdalkalicarbonate oder ähnliche aus dem Stand der Technik bekannte und übliche feinteilige Feststoffe. Als organische feinteilige Substanzen können die für diesen Zweck bekannten Erdalkalisalze von langkettigen Fettsäuren mit 12 bis 22 Kohlenstoffatomen oder die Amide dieser Fettsäuren verwendet werden. Weitere geeignete organische Feststoffe sind Derivate des Harnstoffs, die durch Umsetzung von Isocyanaten mit Aminen erhalten werden können.

Die erfindungsgemäß einzusetzenden gepfropften Mischpolymere P können als solche oder in Form wässriger Dispersionen verwendet werden. Dabei ist die Verwendung von Dispersionen aufgrund der besseren Dosierungsmöglichkeiten bevorzugt. Man verwendet insbesondere wässrige Dispersionen mit einem Gehalt von 5 bis 50 Gew.-% gepfropften Blockmischpolymeren.

In den nachfolgenden Beispielen wird zunächst die Herstellung der erfindungsgemäß einzusetzenden Verbindungen beschrieben. Es folgen anwendungstechnische Beispiele zum Nachweis der Eigenschaften der erfindungsgemäßen Verbindungen und zum Vergleich dazu Eigenschaften, die mit bekannten Produkten des Standes der Technik erzielt werden können.

Experimentelle Beispiele:

Bezugsbeispiel 1:

Herstellung eines dihydroxyfunktionellen Polyethers:

Ethylenoxid-/propylenoxidhaltiges Blockcopolymer (MW ≈ 5.400, 40 % EO-Anteil), hergestellt nach dem Stand der Technik. Bespielsweise wurden 45 g n-Butandiol und 7 g Kaliummethanolat in einem Druckreaktor vorgelegt und auf 100 °C aufgeheizt. Anschließend wurden 3.240 g Propylenoxid und danach 2.160 g Ethylenoxid über mehrere Stunden zudosiert und bei 100 °C eine Stunde nachreagiert. Nach Abkühlen auf 80 °C wurde das Reaktionsgemisch neutralisiert und abgefüllt.

Bezugsbeispiel 2:

Herstellung eines dihydroxyfunktionellen Polyethers:

Ethylenoxid-/propylenoxidhaltiges Blockcopolymer (MW = 650, 50 % EO-Anteil), hergestellt nach dem Stand der Technik. Bespielsweise wurden 1 mol $H_2O$ und KOH in einem Druckreaktor vorgelegt und auf 100 °C aufgeheizt. Anschließend werden 324 g Propylenoxid über mehrere Stunden und nach einer Nachreaktionszeit von 1 h 216 g Ethylenoxid über mehrere Stunden zudosiert. Nach einer weiteren Nachreaktionszeit von 1 h bei 100 °C und Abkühlen auf 80 °C wird das Reaktionsgemisch neutralisiert und abgefüllt.

Bezugsbeispiel 3:

Herstellung eines Allylpolyethers:

Ethylenoxid-/styroloxidhaltiges Blockcopolymer (MW = 600, 70 % EO-Anteil), hergestellt nach dem Stand der Technik.

Beispielsweise wurden 58 g Allylalkohol und KOH in einem Druckreaktor vorgelegt und auf 120 °C aufgeheizt. Anschließend wurden 120 g Styroloxid über mehrere Stunden und nach einer Nachreaktionszeit von 1 h 440 g Ethylenoxid bei 100 °C über mehrere Stunden zudosiert. Nach einer weiteren Nachreaktionszeit von 1 h bei 100 °C und Abkühlen auf 80 °C wurde das Reaktionsgemisch neutralisiert und abgefüllt.

Bezugsbeispiel 4:

Herstellung eines Allylpolyethers:

Ethylenoxid-/styroloxidhaltiges Blockcopolymer (MW = 600, 70 % EO-Anteil), hergestellt nach dem Stand der Technik. Bespielsweise wurden 58 g Allylalkohol und KOH in einem Druckreaktor vorgelegt und auf 100 °C aufgeheizt. Anschließend wurden über mehrere Stunden 440 g Ethylenoxid und nach einer Nachreaktionszeit von 1 h 120 g Styroloxid bei 120 °C über mehrere Stunden zudosiert. Nach einer weiteren Nachreaktionszeit von 1 h bei 120 °C und Abkühlen auf 80 °C wurde das Reaktionsgemisch neutralisiert und abgefüllt.

Bezugsbeispiel 5:

Herstellung eines Diallylpolyethers:

Der in Beispiel 4 hergestellte Allylpolyether (1 mol) wurde vorgelegt, entgast (Vakuum (10 bis 20 mbar) und mit Stickstoff belüftet. Unter Eiskühlung wurde 1,5 mol kalte 50 %ige Natronlauge hinzugegeben, wobei die Temperatur 25 bis 30 °C nicht überstieg. Danach wurde 1,7 mol Allylchlorid innerhalb von 90 min zugetropft. Die Reaktion war stark exotherm. Durch Regelung der Zutropfgeschwindigkeit wurde die Temperatur knapp unterhalb des Siedepunkts von Allylchlorid gehalten (< 45 °C). Es entstand eine schwachgelbe bis orangefarbene Suspension. Nach Beendigung der Zugabe wurde eine Stunde unter Rückfluss erhitzt (60 °C). Danach wurde das nicht umgesetzte Allylchlorid bei 60 °C und einem Druck von 100 mbar abdestilliert. Die Suspension wurde filtriert. Nach der Überführung in einen Scheidetrichter wurde die wässrige Phase abgetrennt und verworfen. Zur Entfernung während der Reaktion gebildeter, organischer Nebenprodukte wurde bei 60 °C und 20 mbar destilliert (60 min). Anschließend wurde über Natriumsulfat unter kräftigem Rühren (12 h) getrocknet und filtriert.
Man erhielt ein klares, gelbes bis orangefarbenes Produkt.

Bezugsbeispiel 6:

Herstellung eines $(AB)_n$-Polyethersiloxans (Formel (I)):

In einem Dreihalskolben mit Rührer, Destillationsbrücke und Gaseinleitungsrohr wurden 712 g eines Polyethers aus Bezugsbeispiel 1 (OHZ = 50, n = 2,9) vorgelegt und mit der gleichen Menge Toluol versetzt. Nach dem Abdestillieren von ca. 200 g Toluol zur azeotropen Trocknung des Polyethers wurde auf 75 °C abgekühlt, die Destillationsbrücke gegen einen Tropftrichter ausgetauscht und innerhalb von 30 min 288 g eines $\alpha,\omega$-Dichlordimethylpolysiloxans (B) (x = 15) zugetropft. Nach einer Nachreaktionszeit von 1 h bei 80 °C wurde mit Ammoniak neutralisiert, vom Ammoniumchlorid filtriert und vom Lösemittel befreit.

Bezugsbeispiel 7:

Herstellung eines $(AB)_n$-Polyethersiloxans (Formel (IV)):

In einem Dreihalskolben wurden 2,8 mol des in Beispiel 5 hergestellten Polyethers, sowie 0,2 mol 1-Hexen zusammen mit 3 mol eines $\alpha,\omega$-SiH-Siloxans (N = 50, SiH = 0,55) und 10 ppm Platin-Katalysator vorgelegt und unter Rühren auf 90 °C aufgeheizt. Nach 1 h Nachreaktion bei 120 °C, wurde das klare Produkt unter Ölpumpenvakuum (< 5 mbar) destilliert, filtriert und abgefüllt.

Bezugsbeispiel 8:

Herstellung eines $(AB)_n$-Polyethersiloxans (Formel (IV)):

In einem Dreihalskolben wurden 6,5 mol des in Beispiel 5 hergestellten Polyethers, sowie 0,5 mol des in Beispiel 4 hergestellten Allylpolyethers zusammen mit 7 mol eines seitenständigen SiH-Siloxans (20,5/5, SiH = 2,52) und 10 ppm Platin-Katalysator vorgelegt und unter Rühren auf 90 °C aufgeheizt. Nach 1 h Nachreaktion bei 120 °C, wurde das klare Produkt unter Ölpumpenvakuum (< 5 mbar) destilliert, filtriert und abgefüllt.

Bezugsbeispiel 9 (Verfahren 1) :

Umsetzung eines $(AB)_n$-Polyethersiloxans mit Styrol unter Verwendung von Trigonox® 117 als Initiator:

100 g Polyethersiloxan aus Beispiel 6 wurden in einem Vierhalskolben ausgestattet mit Rührer, Intensivkühler, Thermometer und Tropftrichter unter Stickstoffatmosphäre auf 140 °C aufgeheizt. Bei Erreichen der Temperatur wurden 20 g Styrol und 1,8 g Trigonox® 117 innerhalb von 60 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein farbloses, klares Produkt.

Bezugsbeispiel 10 (Verfahren 1) :

Umsetzung eines $(AB)_n$-Polyethersiloxans mit Butylmethacrylat unter Verwendung von Trigonox® B als Initiator:

100 g Polyethersiloxan aus Bezugsbeispiel 6 wurden in einem Vierhalskolben ausgestattet mit Rührer, Intensivkühler, Thermometer und Tropftrichter unter Stickstoffatmosphäre auf 160 °C aufgeheizt. Bei Erreichen der Temperatur wurden 20 g Butylmethacrylat und 3,6 g Trigonox® B innerhalb von 60 Minuten zugetropft, wobei eine exotherme Reaktion beobachtet wurde. Die Reaktionsmischung wurde daraufhin eine Stunde bei 160 °C gehalten. Anschließend wurden unter Verwendung einer Destillationsbrücke Restmonomere bei 145 °C und Ölpumpenvakuum abdestilliert. Man erhielt ein gelbliches, klares Produkt. Das 1H-NMR Spektrum des Produktes zeigte, dass die benzylische Position am Polyether ($\delta$ = 4,7 bis 4,9 ppm) bevorzugt gepfropft wird.

Bezugsbeispiel 11 (Verfahren 1) :

Umsetzung eines $(AB)_n$-Polyethersiloxans mit Butylacrylat unter Verwendung von Trigonox® D-C50 als Initiator:

100 g Polyethersiloxan aus Bezugsbeispiel 6 wurden in einem Vierhalskolben ausgestattet mit Rührer, Intensivkühler, Thermometer und Tropftrichter unter Stickstoffatmosphäre auf 140 °C aufgeheizt. Bei Erreichen der Temperatur wurden 10 g Butylacrylat und 3,4 g Trigonox® 201 innerhalb von 60 Minuten zugetropft, wobei eine exotherme Reaktion beobachtet wurde. Die Reaktionsmischung wurde daraufhin eine Stunde bei 150 °C gehalten. Anschließend wurden unter Verwendung einer Destillationsbrücke Restmonomere bei 145 °C und Ölpumpenvakuum abdestilliert. Man erhielt ein gelbliches, klares Produkt.

Bezugsbeispiel 12 (Verfahren 1) :

Umsetzung eines $(AB)_n$-Polyethersiloxans mit Methacrylat und Ethylhexylacrylat unter Verwendung von Perkadox® 16 als Initiator:

100 g Polyethersiloxan aus Bezugsbeispiel 6 wurden in einem Vierhalskolben ausgestattet mit Rührer, Intensivkühler, Thermometer und Tropftrichter unter Stickstoffatmosphäre auf 82 °C aufgeheizt. Bei Erreichen der Temperatur wurden 20 g einer 1 : 1 Mischung aus Methacrylat und Ethylhexylacrylat und 5,4 g Perkadox® 16 innerhalb von 60 Minuten zugetropft, wobei eine exotherme Reaktion beobachtet wurde. Die Reaktionsmischung wurde daraufhin eine Stunde bei 100 °C gehalten. Anschließend wurden unter Verwendung einer Destillationsbrücke Restmonomere bei 150 °C und Ölpumpenvakuum abdestilliert. Man erhielt ein farbloses, klares Produkt.

Bezugsbeispiel 13 (Verfahren 2) :

Umsetzung eines Polyethers mit Methacrylat und Ethylhexylacrylat unter Verwendung von Trigonox® B als Initiator:

100 g Dihydroxypolyether aus Bezugsbeispiel 2 wurden in einem Vierhalskolben ausgestattet mit Rührer, Intensivkühler, Thermometer und Tropftrichter unter Stickstoffatmosphäre auf 82 °C aufgeheizt. Bei Erreichen der Temperatur wurden 20 g einer 1 : 2-mol-Mischung aus Methacrylat und Ethylhexylacrylat und 5,4 g Perkadox® 16 innerhalb von 60 Minuten zugetropft, wobei eine exotherme Reaktion beobachtet wurde. Die Reaktionsmischung wurde daraufhin eine Stunde bei 100 °C gehalten. Anschließend wurden unter Verwendung einer Destillationsbrücke Restmonomere bei 150 °C und Ölpumpenvakuum abdestilliert. Man erhielt ein farbloses, klares Produkt.

Bezugsbeispiel 14 (Verfahren 2) :

Herstellung eines $(AB)_n$-Polyethersiloxans:

In einem Dreihalskolben mit Rührer, Destillationsbrücke und Gaseinleitungsrohr wurden 712 g des gepfropften Polyethers aus Bezugsbeispiel 13 vorgelegt und mit der gleichen Menge Toluol versetzt. Nach dem Abdestillieren von ca. 200 g Toluol zur azeotropen Trocknung des Polyethers wurde auf 75 °C abgekühlt, die Destillationsbrücke gegen einen Tropftrichter ausgetauscht und innerhalb von 30 min 288 g eines $\alpha,\omega$-Dichlordimethylpolysiloxans (B) (Kettenlänge = 15) zugetropft. Nach einer Nachreaktionszeit von 1 h bei 80 °C wurde mit Ammoniak neutralisiert, vom Ammoniumchlorid filtriert und vom Lösemittel befreit.

<u>Anwendungstechnische Ausprüfung:</u>

Prüfung der entschäumenden Wirkung in kommerziell erhältlichen Polymerdispersionen:

Für den folgenden Vergleich wurden die erfindungsgemäß hergestellten gepfropften Polyoxyalkylen-Polysiloxan-Blockmischpolymere mit den entsprechenden nicht gepfropften Polyoxyalkylen-Polysiloxan-Blockmischpolymeren in Bezug auf Entschäumung und Verträglichkeit vor und nach Kältelagerung gegenübergestellt. Die Prüfung erfolgte in der Acrylatdispersion Primal® SF-016, Fa. Rohm-Haas.

Dazu wurden folgende Formulierungen hergestellt:

| | |
|---|---|
| 110,00 g | Bindemittel (Acrylatdispersion, Primal® SF - 016, Rohm-Haas) |
| 0,44 g | Entschäumer |

Die erfindungsgemäßen und nicht erfindungsgemäßen Entschäumer wurden zunächst 3 Minuten bei 1.000 U/min mittels eines Turbinenrührers (Durchmesser 4 cm) eingearbeitet.

Anschließend wurden folgende Untersuchungen durchgeführt:

50 $\mu$m Rakelaufzug auf Glas:

Die gerührte Substanz wurde in einer Naßschichtdicke von 50 $\mu$m auf ein Glas aufgerakelt. Nach Trocknung wird die Verträglichkeit des Entschäumers durch visuelle Beobachtung der aufgetretenen Benetzungsstörungen beurteilt.

Anschließend wurden 100 g der Mischung aus Bindemittel und Entschäumer bei 2.500 U/min für eine Minute aufgeschäumt. Unmittelbar nach Beendigung des Rührens wurden 50 ml in einen geeichten Meßkolben überführt und ausgewogen. Danach konnte gemäß

$$\text{Vol.-\% Luft} = 100 - 2 \cdot G_R/\gamma$$

($G_{R}$ = Gewicht der gerührten Substanz, $\gamma$ = Dichte der ungerührten Substanz) das aufgenommene Luftvolumen berechnet werden.

Die Tests wurden in Intervallen nach mehreren Tagen Lagerung bei 4 °C wiederholt.

In der folgenden Tabelle 1 werden die Ergebnisse, die mit den erfindungsgemäßen gepfropften Polyoxyalkylen-Polysiloxan-Blockmischpolymeren erzielt worden sind, mit denen von kommerziell verfügbaren nicht gepfropften Entschäumern verglichen.

Tabelle 1:

| Entschäumer | Schaumvolumen RT | Benetzungsfehler | Schaumvolumen Lagerung (4°C) 1 Tag | Benetzungsfehler | Schaumvolumen Lagerung (4°C) 7 Tage | Benetzungsfehler |
|---|---|---|---|---|---|---|
| Ohne Entschäumer | 80 | keine | 80 | keine | 80 | keine |
| Vergleich gemäß DE-A-31 23 103 | 65 | vereinzelte | 75 | starke | 80 | starke |
| Bezugsbeispiel 6 | 50 | keine | 60 | keine | 80 | keine |
| Bezugsbeispiel 9* | 52 | keine | 53 | keine | 51 | keine |
| Bezugsbeispiel 10* | 49 | keine | 49 | keine | 50 | keine |
| Bezugsbeispiel 11* | 60 | keine | 62 | keine | 65 | keine |
| Bezugsbeispiel 12* | 47 | keine | 47 | keine | 50 | keine |
| Bezugsbeispiel 14* | 42 | keine | 43 | keine | 44 | keine |
| *erfindungsgemäßes gepfropftes Polyoxyalkylen-Polysiloxan-Blockmischpolymer | | | | | | |

Wie aus der Tabelle 1 ersichtlich wird, eignen sich die erfindungsgemäßen gepfropften Polyoxyalkylen-Polysiloxan-Blockmischpolymere zum Entschäumen einer wässrigen Dispersion bei gleichzeitig guter Verträglichkeit und sind im Gegensatz zu kommerziell erhältlichen Entschäumern auf Basis nicht gepfropfter Polyoxyalkylen-Polysiloxan-Blockmischpolymere durch eine wesentlich verbesserte Kältestabilität geprägt. Die erfindungsgemäßen Beispiele verdeutlichen die durch das radikalische Pfropfen von kommerziell erhältlichen Polyoxyalkylen-Polysiloxan-Blockmischpolymeren erreichte verbesserte Kältestabilität, die bereits nach 24 h Lagerung bei 4 °C deutliche Vorteile in der Performance der Produkte zeigt. Weiterhin zeigen die anderen für die Anwendung relevanten Eigenschaften dieser Beispiele in Relation zu den Vergleichbeispielen keine signifikanten Veränderungen.

## Patentansprüche

1. Verwendung von Pfropfmischpolymerisaten P auf Basis von Polyoxyalkylen-Polysiloxan-Blockmischpolymeren der allgemeinen Formel (I)

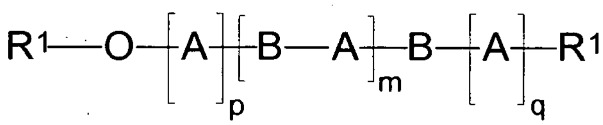

(I)

wobei der Rest

A ein Polyoxyalkylenblock der durchschnittlichen Formel (II) ist

$$[(C_2H_{4-d}R'_dO)_n(C_xH_{2x}O)_r(C_2H_{4-d}R''_dO)_t] \qquad (II)$$

wobei

d 1 bis 3,
$n \geq 0$,
x 2 bis 10,
$r \geq 0$,
$t \geq 0$,
$n + r + t \geq 1$,

sind und

R' ein einwertiger aromatischer, gegebenenfalls substituierter Kohlenwasserstoffrest,
R" ein Wasserstoffrest oder ein einwertiger Kohlenwasserstoffrest mit 1 bis 18 C-Atomen,
$R^1$ ein H-Atom, ein einwertiger organischer linearer oder verzweigter Alkylrest mit der Kettenlänge $C_1$-$C_{40}$ oder ein Carboxyrest eines gegebenenfalls verzweigten Alkyl- oder Arylester ist,

B ein Polysiloxanblock der durchschnittlichen Formel (III) ist

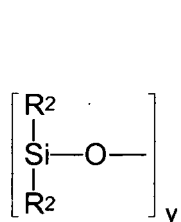

(III)

wobei

$R^2$ gleich oder verschieden ist und einen Alkylrest mit 1 bis 4 Kohlenstoffatomen oder einen Phenylrest

umfasst und
y einen Wert von 5 bis 200,
m einen Wert von 2 bis 100,
p einen Wert von 0 bis 1 und
q einen Wert von 0 bis 1 hat,

oder der Formel (IV)

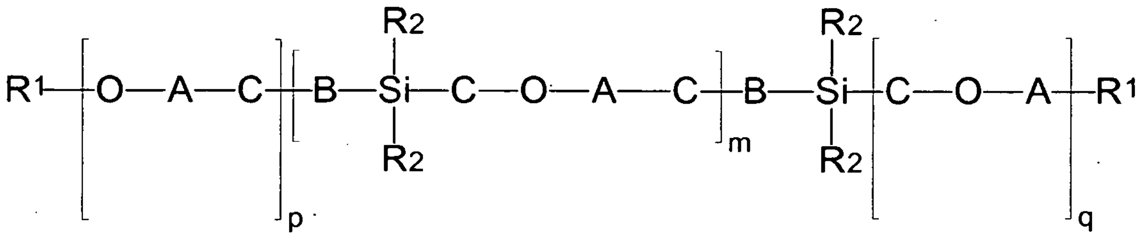

(IV)

wobei die Reste $R^1$, A, B und m, p und q die oben genannte Bedeutung haben und
C ein linearer oder verzweigter Alkylenrest mit 2 bis 20 Kohlenstoffatomen ist,

in Entschäumern für wässrige Lösungen und Dispersionen.

2. Verwendung nach Anspruch 1, **dadurch gekennzeichnet, dass** in der Formel (II) d = 1, R' = Phenyl und $1 \geq n < 15$ bedeuten.

3. Verwendung von Pfropfmischpolymerisaten P nach Anspruch 1 oder 2, hergestellt durch radikalische Pfropf-Polymerisation von ethylenisch ungesättigten Monomeren M in Gegenwart von Polysiloxan-Polyoxyalkylen-Blockpolymeren der wie in Anspruch 1 definierten Formeln (I) oder (IV).

4. Verwendung von Pfropfmischpolymerisaten P gemäß Formel (I) nach Anspruch 1 oder 2, **dadurch gekennzeichnet, dass** die radikalische Pfropfpolymerisation von ethylenisch ungesättigten Monomeren M in Gegenwart von dihydroxyfunktionellen Polyethern der allgemeinen Formel (VI) durchgeführt wird

$$[HO(C_2H_{4-d}R'_dO)_n(C_xH_{2x}O)_r(C_2H_{4-d}R''_dO)_tH] \qquad (VI)$$

wobei R', R'', d, n, x, t und r die in Anspruch 1 bei der Beschreibung des Polyoxyalkylenblocks A genannten Bedeutungen haben.

5. Verwendung nach einem der Ansprüche 3 oder 4, **dadurch gekennzeichnet, dass** die Menge der ethylenisch ungesättigten Monomere M in Bezug auf die Polyoxyalkylen-Polysiloxan-Blockmischpolymere zwischen 2 und 500 Gew.-%, bevorzugt 2 bis 200 Gew.-%, besonders bevorzugt 2 und 100 Gew.-%, beträgt.

6. Verwendung nach einem der Ansprüche 3 bis 5 **dadurch gekennzeichnet, dass** die Monomere M ausgewählt sind aus der Gruppe der Acrylsäure, Methacrylsäure, Vinylether, Vinylalkohole, Vinylester, Styrol, sowie deren Gemischen und Derivaten.

7. Verwendung nach Anspruch 6, **dadurch gekennzeichnet, dass** die Monomeren M Derivate der Acrylsäure und Methacrylsäure der allgemeinen Formel (VII) umfassen,

$$X\text{-}C(O)CR^7{=}CHR^6 \qquad (VII)$$

wobei

$R^7$ und $R^6$ unabhängig voneinander ausgewählt sind aus der Gruppe bestehend aus -H, $C_1$-$C_8$-linear- oder verzweigtkettige Alkylketten, Methoxy, Ethoxy, 2-Hydroxyethoxy, 2-Methoxyethoxy und 2-Ethoxyethyl,

X ausgewählt ist aus der Gruppe der Reste OH, OL, $OR^8$, $NH_2$, $NHR^8$, $N(R^8)_2$,
$R^8$ $C_1$-$C_{40}$-lineare, $C_3$-$C_{40}$-verzweigtkettige, aromatische oder $C_3$-$C_{40}$-carbocyclische Alkylreste, $C_6$-$C_{12}$-mehrfachfunktionelle Alkohole mit 2 bis 10 Hydroxylgruppen wie Ethylenglycol, Hexylenglycol, Glycerin und 1,2,6-Hexantriol von Alkoholethern wie Methoxyethanol und Ethoxyethanol oder Polyethylenglykole sind,
L ein Kation ausgewählt aus der Gruppe bestehend aus $Na^+$, $K^+$, $Mg^{2+}$, $Ca^{2+}$, $Zn^{2+}$, $NH_4^+$, Alkylammonium, Dialkylammonium, Trialkylammonium, Tetraalkylammonium und analoge Phosphoraminderivate, ist.

8. Verwendung nach einem der Ansprüche 3 bis 7, **dadurch gekennzeichnet, dass** die Monomeren M ausgewählt sind aus der Gruppe Styrol, Methylstyrol, tert.-Butylstyrol, Styrolderivate sowie Gemischen dieser Monomere.

9. Verwendung nach einem der Ansprüche 3 bis 8, **dadurch gekennzeichnet, dass** die Monomeren M ausgewählt sind aus der Gruppe der Vinyl- und Allylester von $C_1$-$C_{40}$-linearen, $C_3$-$C_{40}$-verzweigtkettigen oder $C_3$-$C_{40}$-carbocyclischen Carbonsäuren, insbesondere Vinylacetat, Vinylpropionat, Vinylneononanoat, Vinylneoundekansäure oder *t*-Butyl-benzoesäure-vinylester, Vinyl- oder Allylhalogenide sowie aus Mischungen dieser Monomere.

10. Verwendung nach einem der Ansprüche 3 bis 9, **dadurch gekennzeichnet, dass** die Monomeren M ausgewählt sind aus der Gruppe der stickstoffhaltigen Monomere.

11. Verwendung nach Anspruch 10, **dadurch gekennzeichnet, dass** die Monomere M N,N-Dialkylaminoalkylacrylate und -methacrylate und N-Dialkylaminoalkylacryl- und -Methacrylamide der allgemeinen Formel (IX) umfassen,

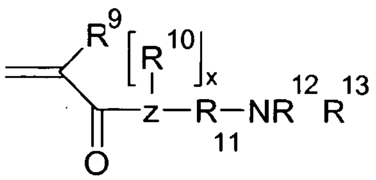

(IX)

wobei

$R^9$ H, Alkyl mit 1 bis 8 C-Atomen,
$R^{10}$ H, Methyl,
$R^{11}$ Alkylen mit 1 bis 24 C-Atomen, optional substituiert durch Alkyl,
$R^{12}$, $R^{13}$ $C_1$-$C_{40}$-Alkylrest,
Z Stickstoff für x = 1 oder Sauerstoff für x = 0,

sind.

12. Verwendung nach Anspruch 10, **dadurch gekennzeichnet, dass** die Monomere M N-Vinylimidazole der allgemeinen Formel (VIII) umfassen,

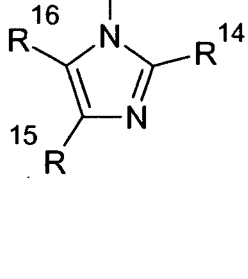

(VIII)

worin $R^{14}$ bis $R^{16}$ unabhängig voneinander für Wasserstoff, $C_1$-$C_4$-Alkyl oder Phenyl steht.

**13.** Verwendung der gepfropften Polyoxyalkylen-Polysiloxan-Blockmischpolymere gemäß einem der Ansprüche 1 bis 12 in Entschäumern von wässrigen Lösungen oder Dispersionen in einer Konzentration von 0,01 bis 20 Gew.-%, bezogen auf die Lösung oder Dispersion.

## Claims

**1.** Use of graft copolymers P based on polyoxyalkylene-polysiloxane block copolymers of the general formula (I)

$$R^1—O—[A]_p[B—A]_m—B—[A]_q—R^1$$

(I)

in which the radical

A is a polyoxyalkylene block of the average formula (II)

$$[C_2H_{4-d}R'_dO)_n(C_xH_{2x}O)_r(C_2H_{4-d}R'_dO)_t] \qquad (II)$$

in which

d is from 1 to 3,
n is ≥ 0,
x is from 2 to 10,
r is ≥ 0,
t is ≥ 0,
n + r + t is ≥ 1,

and

R' is a monovalent aromatic, optionally substituted hydrocarbon radical,
R" is a hydrogen radical or a monovalent hydrocarbon radical having 1 to 18 C atoms,
$R^1$ is an H atom, a monovalent organic linear or branched alkyl radical having the chain length $C_1$-$C_{40}$ or a carboxyl radical of an optionally branched alkyl or aryl ester,

B is a polysiloxane block of the average formula (III)

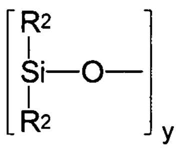

(III)

in which

$R^2$ are identical or different and comprise an alkyl radical having 1 to 4 carbon atoms or a phenyl radical and
y has a value from 5 to 200,
m has a value from 2 to 100,
p has a value from 0 to 1 and
q has a value from 0 to 1,

or of the formula (IV)

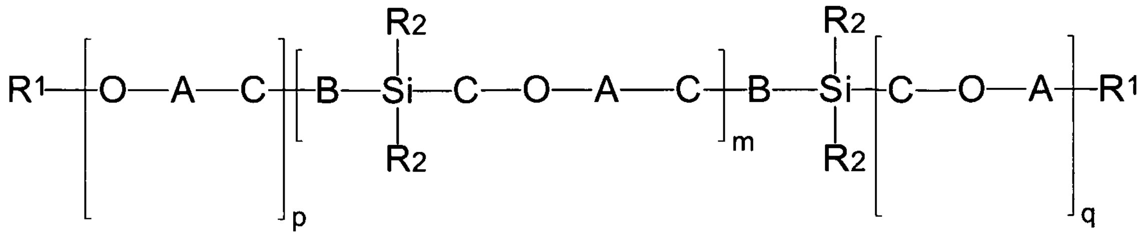

(IV)

in which the radicals $R^1$, A, B and m, p and q have the abovementioned meaning and
C is a linear or branched alkylene radical having 2 to 20 carbon atoms,

in antifoams for aqueous solutions and dispersions.

2. Use according to Claim 1, **characterized in that,** in the formula (II), d is 1, R' is phenyl and $1 \geq n < 15$.

3. Use of graft copolymers P according to Claim 1 or 2, prepared by free radical graft polymerization of ethylenically unsaturated monomers M in the presence of polysiloxane-polyoxyalkylene block polymers of the formulae (I) or (IV) as defined in Claim 1.

4. Use of graft copolymers P according to formula (I) according to Claim 1 or 2, **characterized in that** the free radical graft polymerization of ethylenically unsaturated monomers M is carried out in the presence of dihydroxy-functional polyethers of the general formula (VI)

$$[HO(C_2H_{4-d}R'_dO)_n(C_xH_{2x}O)_r(C_2H_{4-d}R''_dO)_tH] \qquad (VI)$$

in which R', R", d, n, x, t and r have the meanings stated in Claim 1 in the description of the polyoxyalkylene block A.

5. Use according to either of Claims 3 and 4, **characterized in that** the amount of the ethylenically unsaturated monomers M, based on the polysoxyalkylene-polysiloxane block copolymers, is from 2 to 500% by weight, preferably from 2 to 200% by weight, particularly preferably from 2 to 100% by weight.

6. Use according to any of Claims 3 to 5, **characterized in that** the monomers M are selected from the group consisting of acrylic acid, methacrylic acid, vinyl ethers, vinyl alcohols, vinyl esters, styrene and mixtures and derivatives thereof.

7. Use according to Claim 6, **characterized in that** the monomers M comprise derivatives of acrylic acid and methacrylic acid of the general formula (VII)

$$X\text{-}C(O)CR^7{=}CHR^6 \qquad (VII)$$

in which

$R^7$ and $R^6$, independently of one another, are selected from the group consisting of -H, linear $C_1$-$C_8$-alkyl chains or branched $C_1$-$C_8$-alkyl chains, methoxy, ethoxy, 2-hydroxyethoxy, 2-methoxyethoxy and 2-ethoxyethyl,
X is selected from the group consisting of the radicals OH, OL, $OR^8$, $NH_2$, $NHR^8$, $N(R^8)_2$,
$R^8$ are linear $C_1$-$C_{40}$-alkyl radicals, branched $C_3$-$C_{40}$-alkyl radicals, aromatic alkyl radicals or carbocyclic $C_3$-$C_{40}$-alkyl radicals, polyfunctional $C_6$-$C_{12}$ alcohols having 2 to 10 hydroxyl groups, such as ethylene glycol, hexylene glycol, glycerol and 1,2,6-hexanetriol, or alcohol ethers, such as methoxyethanol and ethoxyethanol or polyethylene glycols,
L is a cation selected from the group consisting of $Na^+$, $K^+$, $Mg^{2+}$, $Ca^{2+}$, $Zn^{2+}$, $NH_4^+$, alkylammonium, dialky-

lammonium, trialkylammonium, tetraalkylammonium and analogous phosphoramine derivatives.

**8.** Use according to any of Claims 3 to 7, **characterized in that** the monomers M are selected from the group consisting of styrene, methylstyrene, tert-butylstyrene, styrene derivatives and mixtures of these monomers.

**9.** Use according to any of Claims 3 to 8, **characterized in that** the monomers M are selected from the group consisting of the vinyl and allyl esters of linear $C_1$-$C_{40}$-carboxylic acids, branched $C_3$-$C_{40}$-carboxylic acids or carbocylic $C_3$-$C_{40}$-carboxylic acids, in particular vinyl acetate, vinyl propionate, vinyl neononanoate, vinyl neoundecanoic acid or vinyl tert-butyl benzoate, vinyl or allyl halides and mixtures of these monomers.

**10.** Use according to any of Claims 3 to 9, **characterized in that** the monomers M are selected from the group consisting of the nitrogen-containing monomers.

**11.** Use according to Claim 10, **characterized in that** the monomers M comprise N,N-dialkylaminoalkyl acrylates and methacrylates and N-dialkylaminoalkylacrylamides and - methacrylamides of the general formula (IX)

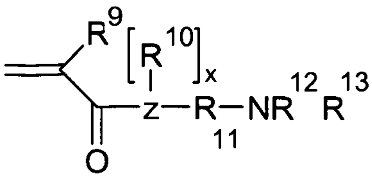

(IX)

in which

$R^9$ is H or alkyl having 1 to 8 C atoms,
$R^{10}$ is H or methyl
$R^{11}$ is alkylene having 1 to 24 carbon atoms, optionally substituted by alkyl,
$R^{12}$, $R^{13}$ are a $C_1$-$C_{40}$-alkyl radical,
Z is nitrogen for x = 1 or oxygen for x = 0.

**12.** Use according to Claim 10, **characterized in that** the monomers M comprise N-vinylimidazoles of the general formula (VIII)

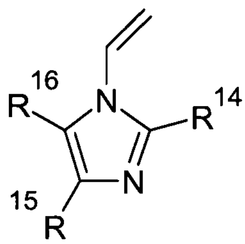

(VIII)

in which $R^{14}$ to $R^{16}$, independently of one another, are hydrogen, $C_1$-$C_4$-alkyl or phenyl.

**13.** Use of the grafted polyoxyalkylene-polysiloxane block copolymers according to any of Claims 1 to 12 in antifoams for aqueous solutions or dispersions in a concentration from 0.01 to 20% by weight, based on the solution or dispersion.

## Revendications

**1.** Utilisation de polymères mixtes de greffage P à base de polymères mixtes séquencés polyoxyalcylène-polysiloxane de la formule générale (I)

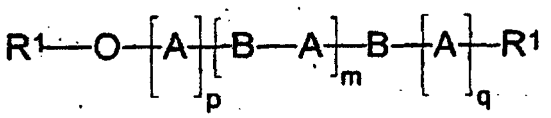 (I)

le radical

A étant un bloc de polyoxyalcylène de la formule moyenne (II)

$$[(CH_2H_{4-d}R'_dO)_n(C_xH_{2x}O)_r(C_2H_{4-d}R''_dO)_t] \qquad (II)$$

où

d va de 1 à 3,
$n \geq 0$,
x va de 2 à 10,
$r \geq 0$,
$t \geq 0$,
$n + r + t \geq 1$,

et

R' est un radical hydrocarboné aromatique monovalent, le cas échéant, substitué,
R" est un radical hydrogène ou une radical hydrocarboné monovalent, ayant de 1 à 18 atomes de carbone,
$R^1$ est un atome de H, un radical alkyle organique monovalent linéaire ou ramifié ayant une longueur de chaîne $C_1$-$C_{40}$ ou un radical carboxy d'un ester alkyle ou aryle, le cas échéant, ramifié,

B est un bloc de polysiloxane de la formule moyenne (III)

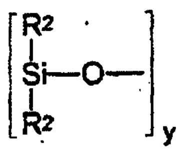 (III)

$R^2$ étant identique ou différent et comprenant un radical alkyle ayant de 1 à 4 atomes de carbone ou un radical phényle et
Y ayant une valeur de 5 à 200,
m ayant une valeur de 2 à 100,
p ayant une valeur de 0 à 1, et
q ayant une valeur de 0 à 1,

ou de la formule (IV)

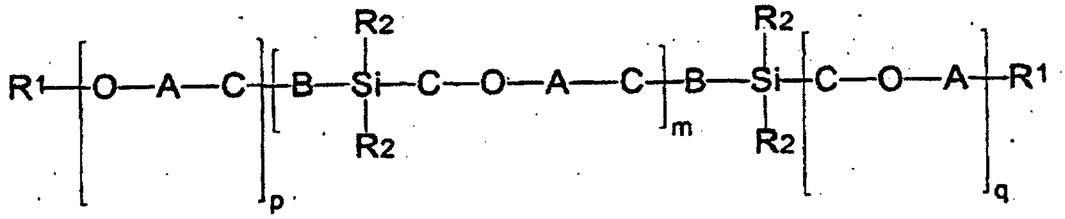

(IV)

les radicaux $R^1$, A, B et m, p et q ayant la signification suscitée et
C étant un radical alcylène linéaire ou ramifié ayant de 2 à 20 atomes de carbone, dans des agents anti-mousse pour des solutions et des dispersions aqueuses.

2. Utilisation selon la revendication 1, **caractérisée en ce que,** dans la formule (II), sont valables les relations d = 1, R' = phényle et $1 \geq n \leq 15$.

3. Utilisation de polymères mixtes de greffage P selon la revendication 1 ou 2, fabriqués par polymérisation de greffage radicalaire de monomères éthyléniquement insaturés M en présence de polymères séquencés polysiloxane-polyoxyalcylène des formules (I) ou (IV) telles que définies dans la revendication 1.

4. Utilisation de polymères mixtes de greffage P conformément à la formule (I) selon la revendication 1 ou 2, **caractérisée en ce que** la polymérisation de greffage radicalaire de monomères éthyléniquement insaturés M est effectuée en présence de polyéthers dihydroxy-fonctionnels de la formule (VI)

$$[(OH(CH_2H_{4-d}R'_dO)_n(C_xH_{2x}O)_r(C_2H_{4-d}R''_dO)_tH] \qquad (VI)$$

R', R'', d, n, x, t, et r ayant les significations citées dans la revendication 1 lors de la description du bloc polyoxyalcylène A.

5. Utilisation selon l'une quelconque des revendications 3 ou 4, **caractérisée en ce que** la quantité de monomères éthyléniquement insaturés M par rapport aux polymères mixtes séquencés polyoxyalcylène-polysiloxane est comprise entre 2 et 500 % en poids, de préférence, entre 2 et 200 % en poids, en particulier, de préférence, entre 2 à 100 % en poids.

6. Utilisation selon l'une quelconque des revendications 3 à 5, **caractérisée en ce que** les monomères M sont sélectionnés parmi le groupe de l'acide acrylique, de l'acide méthacrylique, des éthers vinyliques, des alcools vinyliques, des esters vinyliques, du styrène ainsi que de leurs mélanges et de leurs dérivés.

7. Utilisation selon la revendication 6, **caractérisée en ce que** les monomères M comprennent des dérivés de l'acide acrylique et de l'acide méthacrylique de la formule générale (VII)

$$X\text{-}C(O)CR^7\text{=}CHR^6 \qquad (VII)$$

$R^7$ et $R^6$ étant sélectionnés, indépendamment l'un de l'autre, parmi le groupe se composant de -H, de chaînes alkyles $C_1$-$C_8$-linéaires ou ramifiées, des radicaux méthoxy, éthoxy, 2-hydroxyéthoxy, 2-méthoxyéthoxy et 2-éthoxyéthyle.
X étant sélectionné parmi le groupe des radicaux OH, OL, $OR^8$, NH2, $NHR^8$, $N(R^8)_2$,
$R^8$ représentant des radicaux alkyles $C_1$-$C_{40}$-linéaires, $C_3$-$C_{40}$-ramifiés, aromatiques ou $C_3$-$C_{40}$-carbocycliques, des alcools $C_6$-$C_{12}$-multifonctionnels ayant de 2 à 10 groupements hydroxy, comme l'éthylèneglycol, l'hexylèneglycol, la glycérine et le 1,2,6-hexanetriol, des éthers alcooliques, comme le méthoxyéthanol et l'éthoxyéthanol, ou des polyéthylèneglycols,
L étant un cation sélectionné parmi le groupe se composant des ions $Na^+$, $K^+$, $Mg^{2+}$, $Ca^{2+}$, $Zn^{2+}$, $NH4^+$, alkylammonium, dialkylammonium, trialkylammonium, tétralkylammonium et de dérivés analogues de phosphoreamines.

8. Utilisation selon l'une quelconque des revendications 3 à 7, **caractérisée en ce que** les monomères sont sélectionnés parmi le groupe se composant du styrène, méthylstyrène, tert.-butylstyrène, de dérivés du styrène ainsi que de mélanges de ces monomères.

9. Utilisation selon l'une quelconque des revendications 3 à 8, **caractérisée en ce que** les monomères M sont sélectionnés parmi le groupe des esters vinyliques et allyliques d'acides carboxyliques $C_1$-$C_{40}$-linéaires, $C_3$-$C_{40}$-ramifiés ou $C_3$-$C_{40}$-carbocycliques, en particulier l'acétate de vinyle, le propionate de vinyle, le néononanoate de vinyle, l'ester vinylique de l'acide vinylnéoundécanoïque ou de l'acide t-butyl-benzoïque, des halogénures vinyliques ou allyliques ainsi que des mélanges de ces monomères.

10. Utilisation selon l'une quelconque des revendications 3 à 9, **caractérisée en ce que** les monomères M sont sélectionnés parmi le groupe des monomères contenant de l'azote.

11. Utilisation selon la revendication 10, **caractérisée en ce que** les monomères M comprennent les acrylates et méthacrylates de N,N-dialkylaminoalkyles et les amides des acides N-dialkylaminoalkyl-acryliques et -méthacryliques de la formule générale (IX)

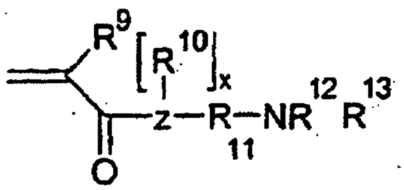

(IX)

$R^9$ désignant H, un radical alkyle ayant de 1 à 8 atomes de C,
$R^{10}$ désignant H, un radical méthyle,
$R^{11}$ désignant un radical alcylène ayant de 1 à 24 atomes de C, substitué en option par un radical alkyle,
$R^{12}$, $R^{13}$ désignant un radical C1-C40-alkyle,
Z désignant l'azote pour x = 1 ou l'oxygène pour x = 0.

12. Utilisation selon la revendication 10, **caractérisée en ce que** les monomères M comprennent les N-vinylimidazoles de la formule générale (VIII)

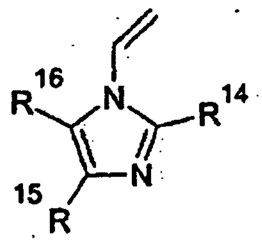

(VIII)

$R^{14}$ à $R^{16}$ représentant, indépendamment les uns des autres, l'hydrogène, un radical $C_1$-$C_4$-alkyle ou un radical phényle.

13. Utilisation des polymères mixtes de greffage polyoxyalcylène-polysiloxane selon l'une quelconque des revendications 1 à 12, dans des agents anti-mousse de solutions ou de dispersions aqueuses, à raison d'une concentration de 0,01 à 20 % en poids, par rapport à la solution ou à la dispersion.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- DE 1012602 A
- DE 2443853 A
- US 4028218 A
- DE 3123103 A
- DE 3807247 A
- EP 408311 A
- EP 558423 B